# EUROPEAN PATENT SPECIFICATION

(11) **EP 1 921 353 B1**
(45) Date of publication and mention of the grant of the patent: **10.08.2011**
(21) Application number: 07020724.6
(22) Date of filing: 23.10.2007
(51) Int. Cl.: F16H 63/42

(54) **Gear shift instruction device and gear shift instruction method**
Getriebeschaltbefehlsvorrichtung und Getriebeschaltbefehlsverfahren
Dispositif d'instruction de levier de vitesse et procédé d'instruction de levier de vitesse

(30) Priority: 08.11.2006 JP 2006302808
(43) Date of publication of application: 14.05.2008
(73) Proprietor: Toyota Jidosha Kabushiki Kaisha, Aichi-ken, 471-8571 (JP)
(72) Inventor: Ohkubo, Tadanao, Toyota-shi Aichi-ken, 471-8571 (JP); Kinoshita, Tomonori, Toyota-shi Aichi-ken, 471-8571 (JP)
(74) Representative: Kuhnen & Wacker

(56) References cited:
- EP-A- 0 406 616
- EP-A- 1 386 776
- DE-A1- 10 014 091
- US-A- 4 550 596
- US-A- 4 723 215

## Description

### BACKGROUND OF THE INVENTION

### 1. Field of the Invention

The present invention relates to a gear shift instruction device and a gear shift instruction method for use in a motor vehicle equipped with an engine and a manual transmission.

### 2. Description of the Related Art

In a motor vehicle equipped with an engine (internal combustion engine), output power of the engine is gear-shifted in a transmission to obtain a required torque or a vehicle speed and then delivered to vehicle wheels. Examples of a vehicle-mounted transmission include an automatic transmission, which is designed to automatically and optimally set a gear ratio between an engine and drive wheels, and a manual transmission.

In case of a motor vehicle equipped with the automatic transmission, an ECU (Electronic Control Unit) stores a gear shift map having gear shift lines (gear step conversion lines) to form an optimum gear step depending on a vehicle speed and an accelerator operation amount. A gear shift is automatically performed according to the gear shift map.

On the other hand, a motor vehicle equipped with the manual transmission basically allows a driver to select an arbitrary gear step and therefore is advantageous in that the motor vehicle can be driven with a high degree of freedom. For instance, the motor vehicle can be driven with an increased driving power by delaying an upshift until the number of engine revolutions becomes greater. However, gear step selection or shift timing can differ greatly from driver to driver because the gear step is arbitrarily set by the driver. This leaves a possibility that the motor vehicle may run with a gear step other than an optimum one. For example, if the driver selects a lower-side gear, i.e., a gear step lower than an optimum one during an operation of shifting up a gear step (an upshift operation), gas mileage would become worse. In contrast, setting a higher-side gear, i.e., a gear step higher than the optimum one, would lead insufficient acceleration performance.

As a solution to the problems of the manual transmission, a gear shift instruction device has been described (see, e.g., Japanese Patent Application Publication No. JP-A-62-94427 and Japanese Patent Application Publication No. JP-A-2003-19912).

In such a gear shift instruction device for a motor vehicle, a gear shift map that defines optimum gear steps (target gear steps) required in improving gas mileage according to vehicle driving conditions such as a vehicle speed and an engine load (e.g., an accelerator operation amount); e.g., a gear shift map having substantially the same gear shift lines as those of the automatic transmission, is stored in an ECU or the like. A target gear step is obtained by referring to the gear shift map based on the vehicle speed and the accelerator operation amount. Determination is made by comparing the target gear step with a gear step actually set by a driver. Based on the result of determination, a gear shift instruction is issued and notified to the driver.

Specifically, if the actual gear step is lower than the target gear step, the gear shift instruction device instructs the driver to perform an upshift, e.g., by turning on an upshift lamp. If the actual gear step is higher than the target gear step, the shift instruction device instructs the driver to perform a downshift, e.g., by turning on a downshift lamp. In this way, the shift instruction device notifies the driver of a necessity to make a gear shift in the transmission. In case the target gear step obtained from the gear shift map is the same as the actual gear step, the shift instruction device notifies the driver that the currently set gear step is a suitable one, e.g., by turning off both the upshift lamp and the downshift lamp.

The Japanese Patent Application Publication No. JP-A-62-94427 which represents the closest prior art and discloses the preamble of claim 1, describes a technique of preventing this kind of shift instruction device from issuing a bothersome gear instruction to the driver. In this technique, a downshift detection unit is provided to detect a downhift operation performed in a transmission, and an upshift instruction lamp is kept from turning on for a predetermined time period after detecting the downshift operation. This technique prevents an upshift instruction from being issued immediately after the driver has conducted a gear shift operation (downshift) for the purpose of acceleration or other purposes.

The afore-mentioned gear shift instruction device is designed to determine a target gear step and then issue a gear shift instruction whenever an accelerator is released, because it is unclear whether the accelerator release operation constitutes a part of the gear shift operation or an operation other than that. Thus, a bothersome unnecessary gear shift instruction may be issued when the diver intends to perform a gear shift.

For example, when the driver has released the accelerator to perform a gear shift operation in response to a downshift instruction (turning-on of the downshift lamp), the downshift lamp will be unwantedly turned off if the target gear step proceeds to a higher step by the accelerator release operation and becomes equal to an actual gear step. Under this situation, the downshift instruction will disappear at the moment when the driver releases the accelerator to perform the shift operation in response to the downshift instruction. This may sometimes perplex the driver because it is impossible for the diver to determine whether the shift operation need to be continued that way or whether the downshift instruction has been cancelled.

Further, when the driver has released the accelerator to perform a shift operation while the shift instruction lamps remain turned off, the upshift lamp will be unnecessarily turned on if the target gear step proceeds to a higher step by the accelerator release operation and becomes different from the actual gear step. Such unnecessary turning-on of the upshift lamp in the midst of the shift operation may sometimes make the driver feel bothersome.

Furthermore, because the Japanese Patent Application Publication No. JP-A-62-94427 is directed to a technique of not refraining issuance of the upshift instruction until actual execution of the gear shift operation (downshift) is detected, the upshift lamp may possibly be turned on when the driver releases the accelerator to perform the gear shift operation. Therefore, the technique still suffers from the the problem of issuance of bothersome gear shift instructions during the gear shift operation.

### SUMMARY OF THE INVENTION

The present invention provides a gear shift instruction device and a gear shift instruction method for use in a motor vehicle equipped with a manual transmission, which prevents bothersome shift instructions from being issued during execution of a gear shift operation.

In accordance with a first aspect of the present invention, a gear shift instruction device is provided for use in a motor vehicle equipped with an engine and a manual transmission to issue a gear shift instruction to a driver depending on the driving state of the motor vehicle. The gear shift instruction device includes: determination means for determining whether an accelerator has been released; and control means for temporarily maintaining a shift instruction issued prior to release of the accelerator, if the determination means determines that the accelerator has been released.

In the first aspect of the present invention, the accelerator release operation is regarded as a part of a gear shift operation for a predetermined time period counted from the determination of release of the accelerator, and the shift instruction issued prior to the release of the accelerator is maintained for the predetermined time period. This makes it possible to prevent the shift instruction from changing right after releasing the accelerator to perform the gear shift operation.

As mentioned earlier, the conventional gear shift instruction device determines target gear step and then issues a gear shift instruction whenever an accelerator is released, because it is unclear whether the accelerator release operation constitutes a part of a shift operation or an operation other than the shift operation.

In a conventional shift instruction device, if a downshift instruction is issued (if the downshift lamp is turned on) for instance, the driver releases the accelerator to perform the shift operation according to the downshift instruction. However, if the target gear step proceeds to a higher step when the accelerator is released, the downshift lamp is switched off during the gear shift operation. In contrast, the first aspect of the present invention ensures that a gear shift instruction issued prior to the release of the accelerator is maintained, namely a downshift lamp remains on, for a predetermined time period after the release of the accelerator. This makes it possible to avoid an issuance of a confusing shift instruction, such as turning-off of the downshift lamp in the middle of a downshift operation that is executed according to a downshift instruction.

Furthermore, in the conventional shift instruction device, the upshift lamp is turned on in the middle of a shift operation, e.g., if a target gear step proceeds from an Nth gear step to an (N+1)th gear step when the driver releases the accelerator to perform a shift operation while the a manual transmission is kept in the suitable Nth gear step (with the shift instruction lamps remaining off). However, according to the first aspect of the present invention, a shift instruction issued prior to the release of the accelerator is maintained, i.e., shift instruction lamps remain off, for a predetermined time after the release of the accelerator. Therefore, it is possible to avoid occurrence of a bothersome situation, such as turning-on of the upshift lamp during a gear shift operation.

In a method of the first aspect of the invention for determining whether the accelerator has been released, it may be determined that the accelerator have been released if a variation per unit time of an accelerator operation amount becomes equal to or greater than a predetermined threshold value while the accelerator operation amount decreases.

In a configuration in accordance with the first aspect of the present invention, a target gear step determined based on a driving state of the motor vehicle may be compared with an actual gear step established in the transmission, and a gear shift instruction may be issued according to the comparison result. More specifically, the target gear step may be determined with reference to a gear shift map based on a vehicle speed and the accelerator operation amount or a throttle opening degree, the target gear step thus determined is compared with the actual gear step.

In accordance with a second aspect of the present invention, a gear shift instruction method is provided for use in a motor vehicle equipped with an engine and a manual transmission to issue a gear shift instruction to a driver depending on the driving state of the motor vehicle. The gear shift instruction method includes: determining whether an accelerator has been released; and temporarily maintaining a shift instruction issued prior to release of the accelerator, if the determination means determines that the accelerator has been released.

### BRIEF DESCRIPTION OF THE DRAWINGS

The above and other features and advantages of the present invention will become apparent from the following description of example embodiments, given in conjunction with the accompanying drawings, in which:
Fig. 1 is a side view showing principle parts of a motor vehicle equipped with a gear shift instruction device in accordance with an embodiment of the present invention;
Fig. 2 is a front view illustrating a combination meter;
Fig. 3 is a block diagram showing a control system of the gear shift instruction device in accordance with the embodiment of the present invention;
Fig. 4 is a view representing a gear shift map used in a gear shift instruction control;
Figs. 5A and 5B are views illustrating a turned-on state of an upshift lamp and a downshift lamp, wherein Fig. 5A is directed to an upshift operation and Fig. 5B is concerned with a downshift operation;
Fig. 6 is a flowchart illustrating details of the shift instruction control; and
Fig. 7 is a timing chart illustrating an operation of the gear shift instruction control.

### DETAILED DESCRIPTION OF EMBODIMENTS

Hereinafter, embodiments of the present invention will be described with reference to the accompanying drawings.

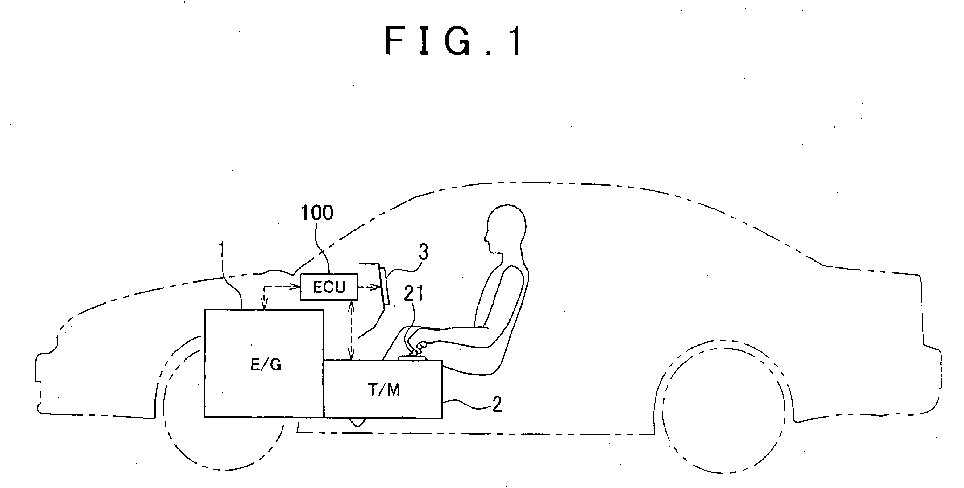

First, a motor vehicle equipped with an embodiment of the present invention will be set forth with reference to Fig. 1.

The example motor vehicle of the present embodiment includes an engine (internal combustion engine) 1, a manual transmission 2, a combination meter 3 and an ECU (Electronic Control Unit) 100, which are arranged in a layout as illustrated in Fig. 1. A vehicle body is depicted by an imaginary line in Fig. 1.

The manual transmission 2 is provided with, e.g., shift gears of five steps. A shift knob 21 for allowing a driver to perform a manual shifting operation protrudes in a passenger compartment.

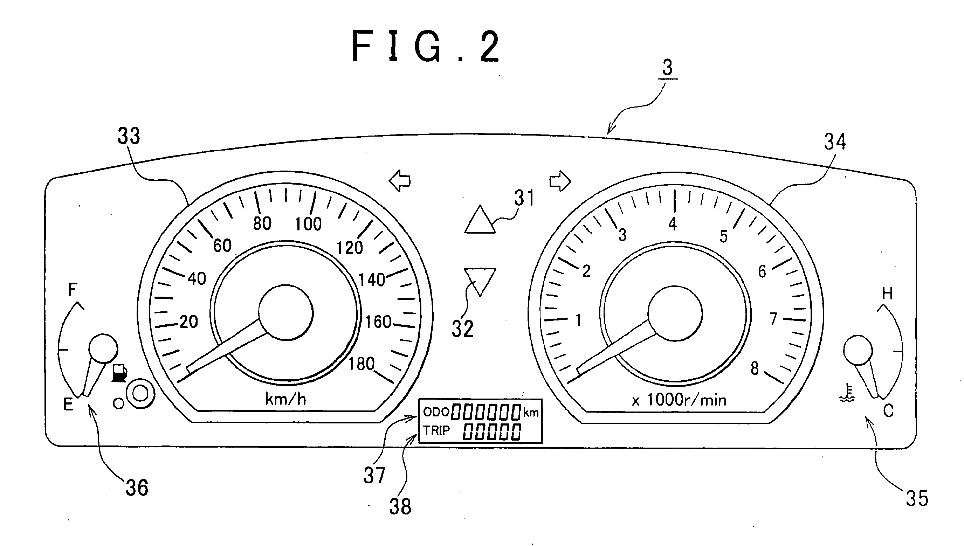

The combination meter 3 is installed on a dashboard in front of a driver's seat in the passenger compartment. A speedometer 33, a tachometer 34, a water temperature gauge 35, a fuel gauge 36, an odometer 37, a trip meter 38 and various kinds of warning indicator lamps are arranged in the combination meter 3, as shown in Fig. 2.

In the present embodiment, the motor vehicle is provided with a gear shift instruction device that instructs a driver to select a gear position of the manual transmission 2 suitable for improving gas mileage depending on the driving state of the motor vehicle. The shift instruction device will be described below.

Arranged in the combination meter 3 as shift instructing indicators are an upshift lamp 31 which is turned on to prompt the driver to supshift and a downshift lamp 32 which is turned on to prompt the driver to downshift. The upshift lamp 31 and the downshift lamp 32 are formed of, e.g., an LED (Light Emitting Diode), and the turning-on and turning-off operations thereof are controlled by the ECU 100 in a manner described later.

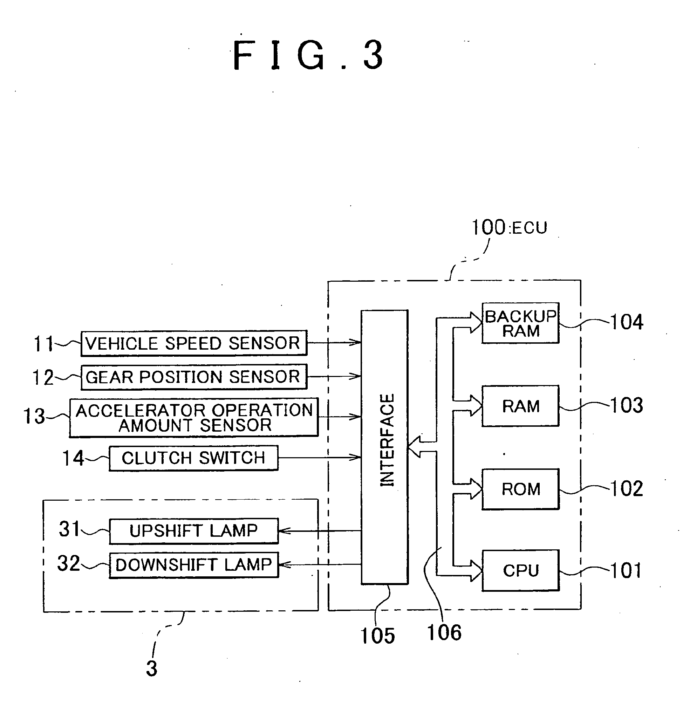

As illustrated in Fig. 3, the ECU 100 is provided with a CPU 101, a ROM 102, a RAM 103 and a backup RAM 104.

The ROM 102 stores various programs including a program that executes not only basic drive control for the motor vehicle but also shift instruction control by which the driver is instructed to select a gear position of the manual transmission 2 suitable for improving the gas mileage depending on a driving state of the motor vehicle. Details on the shift instruction control will be set forth later.

The CPU 101 executes arithmetic processing based on various control programs and maps stored in the ROM 102. The RAM 103 is a memory for temporarily storing the results of operations executed in the CPU 101 and the data input from each sensor. The backup RAM 104 is a nonvolatile memory for storing the data which need to be stored during stoppage of the engine 1.

The CPU 101, the ROM 102, the RAM 103 and the backup RAM 104 are connected to one another and also connected to an interface 105 through a bus 106.

Connected to the interface 105 are various sensors including a vehicle speed sensor 11, a gear position sensor 12 that detects a gear position of the manual transmission 2, an accelerator operation amount sensor 13 that detects an accelerator operation amount and a clutch switch 14 arranged in the vicinity of a clutch pedal. The upshift lamp 31 and the downshift lamp 32 of the combination meter 3 are also connected to the interface 105. Based on detection signals supplied from the above-noted sensors, the ECU 100 executes the gear shift instruction control which will be described later.

The shift instruction device includes the ECU 100, the upshift lamp 31 and the downshift lamp 32, the latter two of which serve as the shift instructing indicators.

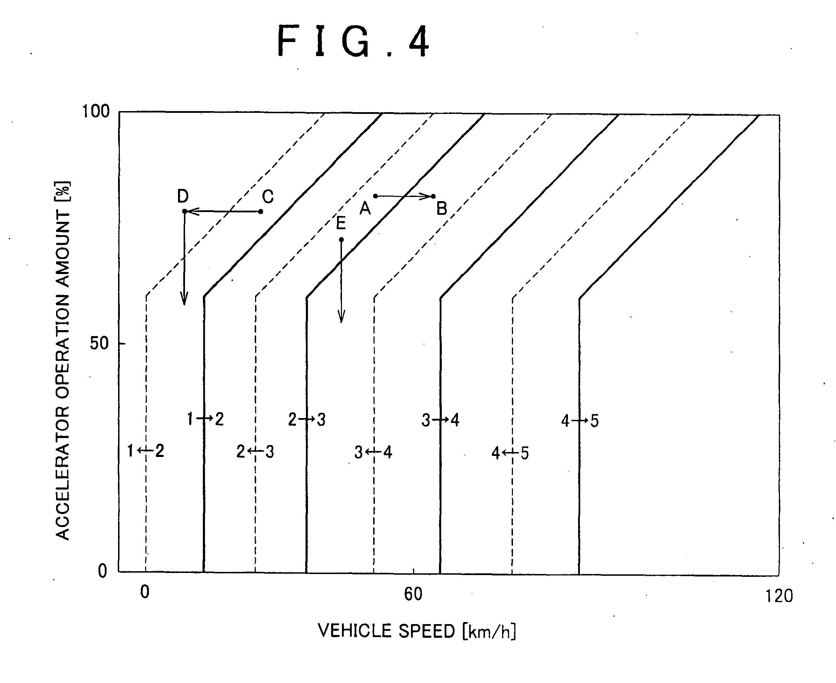

The shift instruction control will now be described in detail. First, a gear shift map used in the shift instruction control of the present embodiment will be described with reference to Fig. 4.

The gear shift map illustrated in Fig. 4 uses the vehicle speed and the accelerator operation amount as parameters and has a plurality of regions which are set to establish an optimum gear step (target gear step) suitable for improving the gas mileage depending on the vehicle speed and the accelerator operation amount. The gear shift map is stored in the ROM 102 of the ECU 100. The respective regions of the gear shift map are divided by a plurality of shift lines (gear step conversion lines).

In the gear shift map illustrated in Fig. 4, upshift lines are indicated by solid lines and downshift lines are represented by broken lines. Conversion directions of an upshift and a downshift are indicated by numerals and arrows in the figure.

Next, the basic operations of the shift instruction control executed by the shift instruction device will be described.

First, based on the detection signals supplied from the gear position sensor 12, the ECU 100 determines the current gear step (actual gear step) of the manual transmission 2. Alternatively, it may be possible to employ a gear step determination method by which the actual gear step is determined according to the vehicle speed, the engine revolution number (an output signal of an engine revolution number sensor) and the clutch state.

Next, based on the output signals of the vehicle speed sensor 11 and the accelerator operation amount sensor 13 and with reference to the gear shift map illustrated in Fig. 4, the ECU 100 determines the target gear step that is appropriate for improving the gas mileage. By comparing the target gear step and the actual gear step, the ECU 100 determines whether there is a need to perform a gear shift operation.

If the determination result reveals that it is desirable to keep the gear step in the current state (i.e., if the target gear step is equal to the actual gear step and the gear step is suitably established), the upshift lamp 31 and the downshift lamp 32 are both turned off. The turning-off of the shift instructing lamps 31 and 32 serves to inform the driver that the current gear step is appropriate and is included in the term "gear shift instructions" used herein.

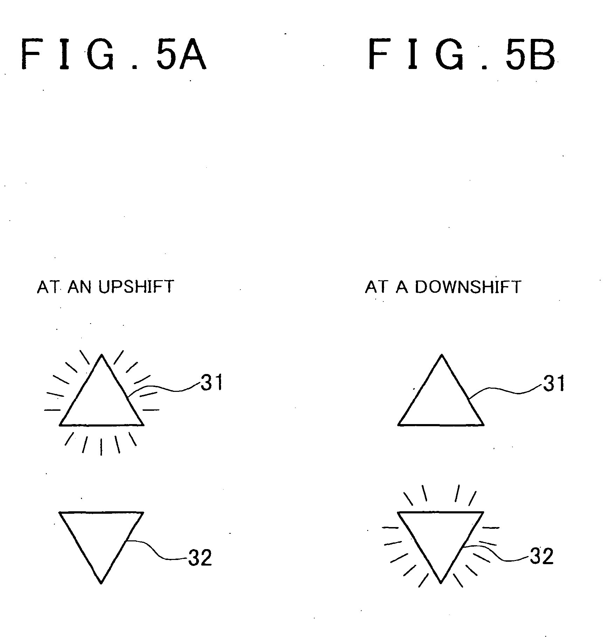

On the other hand, if it is desirable to change the gear step and when an upshift is required, only the upshift lamp 31 is turned on as shown in Fig. 5A. Specifically, if the vehicle speed increases, e.g., from point A to point B in a driving state in which the second gear step is established in the manual transmission 2 as illustrated in Fig. 4, the gear step needs to be changed across the 2→3 gear shift line. Thus, the target gear step determined using the gear shift map is the third gear step which is differs from the currently established gear step. Under this situation, the upshift lamp 31 is turned on to prompt the driver to perform an upshift.

Furthermore, if it is desirable to change the gear step and when a downshift is required, only the downshift lamp 32 is turned on as illustrated in Fig. 5B. Specifically, if the vehicle speed is decreased by an increased driving resistance (e.g., as in the case of uphill driving), e.g., from point C to point D in a driving state in which the second gear step is established in the manual transmission 2 as illustrated in Fig. 4, the gear step needs to be changed across the 1←2 gear shift line. Thus, the target gear step obtained using the gear shift map is the first gear which differ from the currently established gear step. Under this situation, the downshift lamp 32 is turned on to prompt the driver to perform a downshift.

When the downshift lamp 32 is turned on, the driver may shift the manual transmission 2 according to the downshift instructions. However, the downshift lamp 32 may turn off when the accelerator is released to perform the shift operation. For example, if the vehicle speed is changed from point C to point D (see Fig. 4) and if the downshift lamp 32 is turned on as set forth above, the driver releases the accelerator to perform a shift operation according to the downshift instructions thus issued. However, if the accelerator operation amount is reduced by the accelerator releasing operation, the gear step returns to the region of the second gear step across the 1←2 gear shift line shown in Fig. 4. Thus, the target gear step (the second gear step) becomes equal to the actual gear step (the second gear step established prior to the gear shift operation). This causes the downshift lamp 32 to turn off. Accordingly, the downshift instruction disappears during the gear shift operation, despite the driver's intention to perform the shift operation according to the downshift instruction. Under these circumstances, the driver may sometimes be perplexed because the diver cannot determine whether the shift operation should to be continued or whether the downshift instruction has been cancelled.

Furthermore, the upshift lamp 31 may turn on when the driver releases the accelerator to perform a shift operation when the upshift lamp 31 and the downshift lamp 32 are both turned off. For example, the accelerator operation amount is reduced when the driver releases the accelerator to shift the manual transmission 2 when the second gear step is established in the manual transmission 2 (e.g., a state indicated by point E in Fig. 4),. Then, the gear step needs to be changed across the 2→3 gear shift line. Under this situation, the target gear step is the third gear step which differs from the currently established gear step. Thus, the upshift lamp 31 is unnecessarily turned on during the gear shift operation, which may annoy the driver.

For the reasons noted above, the gear shift instruction device of this embodiment is directed to avoid issuing gear shift instructions during shift operations. One of the features of the gear shift instruction device of the present embodiment resides in executing a control whereby it is determined whether the accelerator has been released and, if the accelerator has been released, the accelerator release operation is regarded as a part of a gear shift operation for a predetermined time period counted from the time it is determined that the accelerator has been released and the shift instruction issued prior to release of the accelerator is maintained over the predetermined time period.

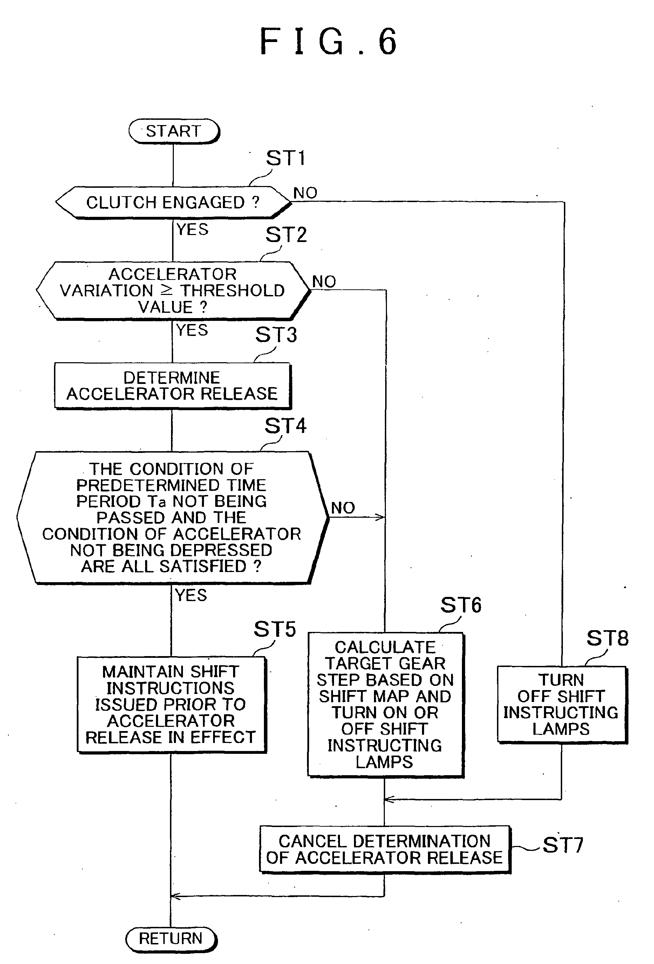

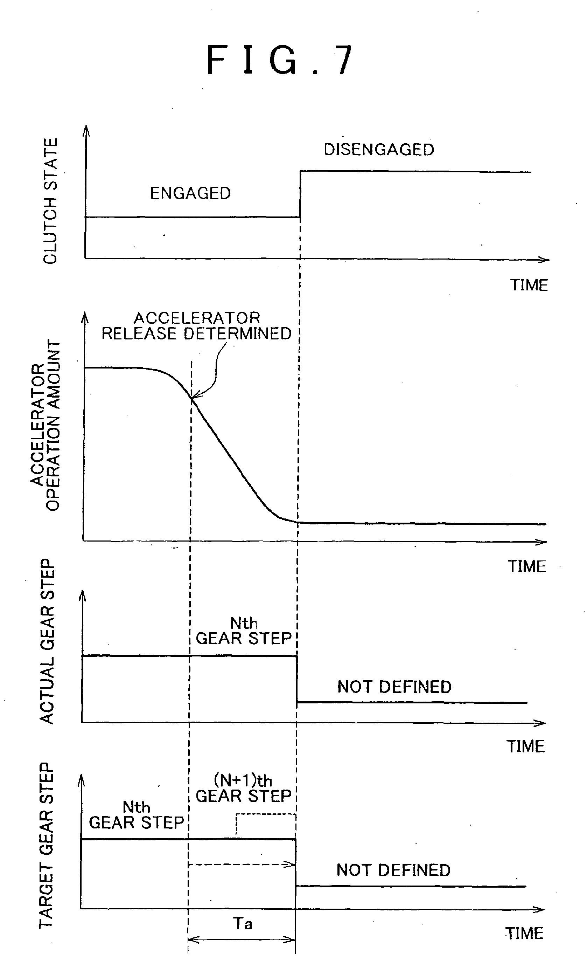

An example of the control (gear shift instruction control) will now be described with reference to a flowchart illustrated in Fig. 6 and a timing chart depicted in Fig. 7. The shift instruction control routine illustrated in Fig. 6 is periodically executed by the ECU 100 at a predetermined time intervals (e.g., at an interval of several milliseconds).

In step ST1, it is determined whether a clutch is completely engaged based on the output signal of the clutch switch 14. If the determination is negative (if the clutch is disengaged), an actual gear step cannot be specified (namely, no gear step is defined). Thus, the upshift lamp 31 and the downshift lamp 32 for issuing shift instructions are all turned off in step ST8. If it is determined that the accelerator is released at this time, the routine is terminated after canceling the determination of release of the accelerator in step ST7. If the result of determination in step ST1 is affirmative, the flow proceeds to step ST2.

In step ST2, if the accelerator operation amount obtained from the output signal of the accelerator operation amount sensor 13 is decreased, it is determined whether the variation per unit time of the accelerator operation amount (an accelerator variation) is equal to or greater than a threshold value (namely whether accelerator variation ≥ threshold value). If the determination is affirmative, it is determined in step ST3 that the accelerator has been released. If the determination is negative, the flow proceeds to step ST6.

The threshold value, which is set relative to the accelerator variation in step ST2, may be set by taking into account a driver's accelerator release speed empirically obtained and by finding beforehand, through experiments and calculation, as a value suitable for rendering the determination of release of the accelerator. The threshold value is stored in the ROM 102 of the ECU 100.

In step ST4, it is determined whether two conditions are all satisfied. One of these two conditions is that a predetermined time period Ta has not elapsed from the determination of release of the accelerator, and the other is that the accelerator is not being depressed. If the determination result in step ST4 is negative, the procedure proceeds to step ST6.

If the determination result in step ST4 is positive, the target gear step established prior to the release of the accelerator is maintained and the gear shift instruction issued prior to release of the accelerator is maintained (step ST5).

The process in step ST5 of maintaining the gear shift instruction issued prior to release of the accelerator continues as long as the determination result in step ST4 remains affirmative, i.e., until the predetermined time period Ta elapses from when the accelerator is released. If the accelerator is depressed again before the predetermined time period Ta has elapsed, the process assigned in step ST5 stops and the flow proceeds to step ST6. Furthermore, if the clutch is disengaged before the predetermined time period Ta has elapsed, an actual gear step cannot be specified. Therefore, the upshift lamp 31 and the downshift lamp 32 are all turned off.

Herein, the predetermined time period Ta used in making determination in step ST4 may be preferably set nearly equal to or slightly longer than time t0, which is measured from when the driver releases the accelerator to when the the clutch is disengaged. If the predetermined time period Ta is set shorter than the time t0, the predetermined time period Ta will elapse before the driver disengages the clutch. This may possibly convert the shift instructions (namely, convert the lamps from a turned-on state to a turned-off state or vice versa). In order to avoid such a situation, the predetermined time period Ta may be set as noted above. The predetermined time period Ta is stored in the ROM 102 of the ECU 100. The time t0 required to disengage the clutch during the gear shift process is determined based on the values experimentally or empirically obtained and in due consideration of individual differences of drivers.

If the result of determination in step ST2 or ST4 is negative, the flow proceeds to step ST6, where a target gear step is determined, to turn on or off the gear shift instructing lamps.

Specifically, the target gear step is determined based on the output signals of the vehicle speed sensor 11 and the accelerator operation amount sensor 13 and also with reference to the gear shift map illustrated in Fig. 4. It is then determined whether the target gear step is equal to an actual gear step (a gear step obtained from the output signal of the gear position sensor 12). If the target gear step is equal to the actual gear step, the upshift lamp 31 and the downshift lamp 32 are all turned off.

If the actual gear step differs from the target gear step and if the target gear step is an (N+1)th gear step, which is higher than the actual gear step (Nth gear step), only the upshift lamp 31 is turned on as illustrated in Fig. 5A. If the target gear step is an (N-1)th gear step, which is lower than the actual gear step (Nth gear step), only the downshift lamp 32 is turned on as illustrated in Fig. 5B.

After the shift instructing lamps are turned on or off in this manner, the determination of release of the accelerator is cancelled in step ST7, thus terminating the routine.

As described above, the gear shift instruction control of this embodiment ensures that the gear shift instruction issued prior to release of the accelerator is maintained for the predetermined time period Ta after the determination of release of the accelerator. This makes it possible to avoid issuance of bothersome shift instructions (i.e., turning the gear shift instructing lamps on and off or vice versa) during the gear shift operation, as described below.

If the downshift lamp 32 is turned on in a driving state in which the second gear step is established in the manual transmission 2, the driver releases the accelerator to perform a shift operation, in response to which the accelerator operation amount is decreased. With the conventional gear shift instruction control, a target gear step is determined from the gear shift map at the moment the accelerator is released. Thus, the target gear step returns to the region of a second gear step across the 1←2 gear shift line as illustrated in Fig. 4. Under this situation, the target gear step (second gear step) obtained from the gear shift map becomes equal to the actual gear step (the second gear step established prior to the gear shift operation). For this reason, the downshift lamp 32 is turned off when the accelerator is released. In contrast, with the gear shift instruction control of the present embodiment, the target gear step (first gear step) established prior to release of the accelerator remains unchanged and the downshift lamp 32 remains turned on until the predetermined time period Ta elapses from when the accelerator is released. This makes it possible to avoid issuance of confusing shift instructions, such as turning-off of the lamp, while the gear shift operation is executed according to the downshift instruction. Accordingly, the driver is able to perform a gear shift to a suitable gear step according to the downshift instructions but with no sense of distrust.

Furthermore, with the conventional gear shift instruction control, if the driver releases the accelerator to shift the manual transmission 2 in a driving state (e.g., a state indicated by point E in Fig. 4) in which the Nth gear step (e.g., a second gear step) is established in the manual transmission 2 with the gear shift instructing lamps 31 and 32 kept turned off, the accelerator operation amount is decreased. As a result the gear step crosses one of the upshift lines (e.g., the 2→3 shift line), thereby achieving a target gear step of an (N+1)th gear step (e.g., a third gear step) as depicted by a broken line in Fig. 7. Thus, the actual gear step becomes different from the target gear step and, consequently, the upshift lamp 31 is turned on during the shift operation. In contrast, with the shift instruction control of the present embodiment, the target gear step (Nth gear step) established prior to release of the accelerator is remains unchanged and the shift instructing lamps 31 and 32 remain turned off until the predetermined time period Ta elapses from when the accelerator is released. This makes it possible to avoid occurrence of a bothersome situation, such as turning-on of the lamp, during the shift operation.

Other embodiments of the present invention are described below. Although the driver may be notified of the gear shift instructions by turning on the upshift lamp 31 and the downshift lamp 32 in the foregoing embodiment, the shift instructing lamps 31 and 32, may be alternatively designed to flicker. Furthermore, the shift instructing lamps 31 and 32 may be formed of either a monochromatic light emitting body or two or more light emitting bodies capable of emitting light of two or more colors, each color conferring a different meaning. Moreover, shift instructing sound or voice may be output instead of using the gear shift instructing lamps 31 and 32.

In addition, the gear shift map used in the shift instruction control is not limited to the one illustrated in Fig. 4. A gear shift map having other types of arbitrary gear shift lines may be used in the gear shift instruction control.

Although the present invention is applied to a motor vehicle equipped with the manual transmission 2 in the foregoing embodiment, the present invention is not limited to motor vehicles equipped with the manual transmission 2 but may also be applied to motor vehicles equipped with an automatic transmission having a manual shift function. The automatic transmission having a manual shift function is available, one example of which is called a sequential shift wherein an upshift and a downshift are performed by manipulating the shift lever forward and backward.

Although the upshift and downshift lamps 31 and 32 for gear shift instruction are installed in the combination meter 3 in the foregoing embodiment, no particular restriction is imposed on the installation location of the shift instructing lamps 31 and 32. As an example, the shift instructing lamps 31 and 32 may be installed near the combination meter 3 rather than in the combination meter 3. In addition, the gear shift instructing lamps 31 and 32 may be displayed through a conventional navigation system or a head-up display system that projects information on a front glass.

While the invention has been shown and described with respect to the example embodiments, it will be understood by those skilled in the art that various changes and modification may be made without departing from the scope of the invention as defined in the following claims.

## Claims

1. A gear shift instructing device for use in a motor vehicle equipped with an engine (1) and a manual transmission (2) to issue a gear shift instruction to a driver in accordance with a driving state of the motor vehicle, the gear shift instructing device comprising:
determination means for determining whether an accelerator has been released; and
control means for temporarily maintaining a gear shift instruction issued prior to release of the accelerator, if the determination means determines that the accelerator has been released.

2. The gear shift instructing device according to claim 1, wherein the determination means determines that the accelerator has been released if a variation per unit time of an accelerator operation amount is equal to or greater than a predetermined threshold value when the accelerator operation amount is decreased.

3. The gear shift instructing device according to claim 1 or 2, wherein a target gear step of the transmission obtained based on the driving state of the motor vehicle is compared with an actual gear step established in the transmission, and a shift instruction is issued according to the comparison result.

4. The gear shift instructing device according to claim 3, wherein the target gear step is obtained using a gear shift map based on a vehicle speed and the accelerator operation amount or a throttle opening degree.

5. The gear shift instructing device according to any one of claims 1 to 4, wherein the control means determines whether a clutch of the motor vehicle is engaged, and does not issue the gear shift instruction when the clutch is not engaged.

6. The gear shift instructing device according to any one of claims 1 to 5, wherein the control means determines whether the accelerator is depressed and whether a predetermined time period elapsed from the release of the accelerator, and
wherein the control means maintains the gear shift instruction issued prior to release of the accelerator when the accelerator is not depressed and the predetermined time period has not elapsed from the release of the accelerator.

7. A gear shift instructing method for use in a motor vehicle equipped with an engine (1) and a manual transmission (2) to issue a gear shift instruction to a driver in accordance with a driving state of the motor vehicle, the gear shift instructing method comprising:
determining whether an accelerator has been released; and
temporarily maintaining a gear shift instruction that is issued prior to release of the accelerator, if it is determined that the accelerator has been released.

8. The gear shift instructing method according to claim 7, wherein it is determined that the accelerator has been released if a variation per unit time of an accelerator operation amount is equal to or greater than a predetermined threshold value when the accelerator operation amount is decreased.

9. The gear shift instructing method according to claim 7 or 8, wherein a target gear step of the transmission obtained based on the driving state of the motor vehicle is compared with an actual gear step established in the transmission, and a shift instruction is issued according to the comparison result.

10. The gear shift instructing method according to claim 9, wherein the target gear step is obtained using a gear shift map based on a vehicle speed and the accelerator operation amount or a throttle opening degree.

11. The gear shift instructing method according to any one of claims 7 to 10, further comprising:
determining whether a clutch of the motor vehicle is engaged,
wherein if it is determined that the clutch is not engaged, no gear shift instruction is issued.

12. The gear shift instructing method according to any one of claims 7 to 11, further comprising:
determining whether the accelerator is depressed and whether a predetermined time period elapsed from the release of the accelerator,
wherein the gear shift instruction issued prior to release of the accelerator is maintained when the accelerator is not depressed and the predetermined time period has not elapsed from the release of the accelerator.

## Patentansprüche

1. Gangschaltanweisungsvorrichtung zur Verwendung in einem Kraftfahrzeug, das mit einem Verbrennungsmotor (1) und einem Handschaltgetriebe (2) ausgestattet ist, um einem Fahrer gemäß einem Antriebszustand des Kraftfahrzeugs eine Gangschaltanweisung zu erteilen, wobei die Gangschaltanweisungsvorrichtung aufweist:
eine Bestimmungseinrichtung zum Bestimmen, ob ein Fahrpedal losgelassen worden ist; und
eine Steuerungseinrichtung zum vorübergehenden Aufrechterhalten einer Gangschaltanweisung, die vor dem Loslassen des Fahrpedals erteilt wurde, wenn die Bestimmungseinrichtung bestimmt, dass das Fahrpedal losgelassen worden ist.

2. Gangschaltanweisungsvorrichtung nach Anspruch 1, wobei die Bestimmungseinrichtung bestimmt, dass das Fahrpedal losgelassen worden ist, wenn eine Variation pro Zeiteinheit eines Fahrpedalverstellgrads größer oder gleich einem vorbestimmten Schwellwert ist, wenn der Fahrpedalverstellgrad verringert wird.

3. Gangschaltanweisungsvorrichtung nach Anspruch 1 oder 2, wobei eine Soll-Gangstufe des Getriebes, die basierend auf dem Antriebszustand des Kraftfahrzeugs erhalten wird, mit einer Ist-Gangstufe verglichen wird, die in dem Getriebe eingestellt ist, und eine Schaltanweisung gemäß dem Vergleichsergebnis erteilt wird.

4. Gangschaltanweisungsvorrichtung nach Anspruch 3, wobei die Soll-Gangstufe unter Verwendung eines Gangschaltkennfeldes auf Basis einer Fahrzeuggeschwindigkeit und des Fahrpedalverstellgrades oder eines Drosselklappenöffnungsgrades erhalten wird.

5. Gangschaltanweisungsvorrichtung nach einem der Ansprüche 1 bis 4, wobei die Steuerungseinrichtung bestimmt, ob eine Kupplung des Kraftfahrzeugs eingerückt ist, und die Gangschaltanweisung nicht erteilt, wenn die Kupplung nicht eingerückt ist.

6. Gangschaltanweisungsvorrichtung nach einem der Ansprüche 1 bis 5, wobei die Steuerungseinrichtung bestimmt, ob das Fahrpedal verstellt ist und ob eine vorbestimmte Zeitspanne seit dem Loslassen des Fahrpedals verstrichen ist, und wobei die Steuerungseinrichtung die Gangschaltanweisung, die vor dem Loslassen des Fahrpedals erteilt wurde, aufrechterhält, wenn das Fahrpedal nicht betätigt wird und die vorbestimmte Zeitspanne seit dem Loslassen des Fahrpedals nicht verstrichen ist.

7. Gangschaltanweisungsverfahren zur Verwendung in einem Kraftfahrzeug, das mit einem Verbrennungsmotor (1) und einem Handschaltgetriebe (2) ausgestattet ist, um einem Fahrer gemäß einem Antriebszustand des Kraftfahrzeugs eine Gangschaltanweisung zu erteilen, wobei das Gangschaltanweisungsverfahren folgende Schritte beinhaltet:
Bestimmen, ob ein Fahrpedal losgelassen worden ist; und
vorübergehendes Aufrechterhalten einer Gangschaltanweisung, die vor dem Loslassen des Fahrpedals erteilt wurde, wenn bestimmt wird, dass das Fahrpedal losgelassen worden ist.

8. Gangschaltanweisungsverfahren nach Anspruch 7, wobei bestimmt wird, dass das Fahrpedal losgelassen worden ist, wenn eine Variation pro Zeiteinheit eines Fahrpedalverstellgrads größer oder gleich einem vorbestimmten Schwellwert ist, wenn der Fahrpedalverstellgrad verringert wird.

9. Gangschaltanweisungsverfahren nach Anspruch 7 oder 8, wobei eine Soll-Gangstufe des Getriebes, die basierend auf dem Antriebszustand des Kraftfahrzeugs erhalten wird, mit einer Ist-Gangstufe verglichen wird, die in dem Getriebe eingestellt ist, und eine Schaltanweisung gemäß dem Vergleichsergebnis erteilt wird.

10. Gangschaltanweisungsverfahren nach Anspruch 9, wobei die Soll-Gangstufe unter Verwendung eines Gangschaltkennfeldes auf Basis einer Fahrzeuggeschwindigkeit und des Fahrpedalverstellgrades oder eines Drosselklappenöffnungsgrades erhalten wird.

11. Gangschaltanweisungsverfahren nach einem der Ansprüche 7 bis 10, ferner aufweisend:
Bestimmen, ob eine Kupplung des Kraftfahrzeugs eingerückt ist,
wobei, wenn bestimmt wird, dass die Kupplung nicht eingerückt ist, keine Gangschaltanweisung erteilt wird.

12. Gangschaltanweisungsverfahren nach einem der Ansprüche 7 bis 11, ferner aufweisend:
Bestimmen, ob das Fahrpedal verstellt ist und ob eine vorbestimmte Zeitspanne seit dem Loslassen des Fahrpedals verstrichen ist,
wobei die Gangschaltanweisung, die vor dem Loslassen des Fahrpedals erteilt wurde, aufrechterhalten wird, wenn das Fahrpedal nicht betätigt wird und die vorbestimmte Zeitspanne seit dem Loslassen des Fahrpedals nicht verstrichen ist.

## Revendications

1. Dispositif pour donner des instructions de changement de vitesse pour utilisation dans un véhicule à moteur équipé d'un moteur (1) et d'une transmission manuelle (2) pour donner au conducteur une instruction de changement de vitesse en fonction de l'état de conduite du véhicule à moteur, le dispositif pour donner des instructions de changement de vitesses comprenant :
un moyen de détermination destiné à déterminer si l'accélérateur a été relâché ; et
un moyen de commande destiné à maintenir temporairement une instruction de changement de vitesse émise avant le relâchement de l'accélérateur, si le moyen de détermination détermine que l'accélérateur a été relâché.

2. Dispositif pour donner des instructions de changement de vitesse selon la revendication 1, dans lequel le moyen de détermination détermine que l'accélérateur a été relâché si la variation par unité de temps de la valeur d'enfoncement d'accélérateur est égale ou supérieure à une valeur prédéterminée de seuil lorsque la valeur d'enfoncement d'accélérateur diminue.

3. Dispositif pour donner des instructions de changement de vitesse selon la revendication 1 ou 2, dans lequel un rapport cible de la transmission obtenu en se basant sur l'état de conduite du véhicule à moteur est comparé avec un rapport réel établi dans la transmission, et dans lequel une instruction de changement de vitesse est émise en fonction du résultat de comparaison.

4. Dispositif pour donner des instructions de changement de vitesse selon la revendication 3, dans lequel le rapport cible s'obtient en utilisant une table de changement de vitesse basée sur la vitesse de véhicule et la valeur d'enfoncement d'accélérateur ou le degré d'ouverture du papillon des gaz.

5. Dispositif pour donner des instructions de changement de vitesse selon l'une quelconque des revendications 1 à 4, dans lequel le moyen de commande détermine si l'embrayage du véhicule à moteur est en prise, et n'émet pas d'instruction de changement de vitesse lorsque l'embrayage n'est pas en prise.

6. Dispositif pour donner des instructions de changement de vitesse selon l'une quelconque des revendications 1 à 5, dans lequel le moyen de commande détermine si l'accélérateur est enfoncé et si une période prédéterminée de temps s'est écoulée depuis le relâchement de l'accélérateur, et
dans lequel le moyen de commande maintient l'instruction de changement de vitesse émise avant le relâchement de l'accélérateur lorsque l'accélérateur n'est pas enfoncé et que la période prédéterminée de temps n'est pas écoulée depuis le relâchement de l'accélérateur.

7. Procédé pour donner des instructions de changement de vitesse pour utilisation dans un véhicule à moteur équipé d'un moteur (1) et d'une transmission manuelle (2) pour donner au conducteur une instruction de changement de vitesse en fonction de l'état de conduite du véhicule à moteur, le procédé pour donner des instructions de changement de vitesses comprenant :
le fait de déterminer si l'accélérateur a été relâché ; et
le fait de maintenir temporairement une instruction de changement de vitesse émise avant le relâchement de l'accélérateur, s'il est déterminé que l'accélérateur a été relâché.

8. Procédé pour donner des instructions de changement de vitesse selon la revendication 7, dans lequel on détermine que l'accélérateur a été relâché si la variation par unité de temps de la valeur d'enfoncement d'accélérateur est égale ou supérieure à une valeur prédéterminée de seuil lorsque la valeur d'enfoncement d'accélérateur diminue.

9. Procédé pour donner des instructions de changement de vitesse selon la revendication 7 ou 8, dans lequel un rapport cible de la transmission obtenu en se basant sur l'état de conduite du véhicule à moteur est comparé avec un rapport réel établi dans la transmission, et dans lequel une instruction de changement de vitesse est émise en fonction du résultat de comparaison.

10. Procédé pour donner des instructions de changement de vitesse selon la revendication 9, dans lequel le rapport cible s'obtient en utilisant une table de changement de vitesse basée sur la vitesse de véhicule et la valeur d'enfoncement d'accélérateur ou le degré d'ouverture du papillon des gaz.

11. Procédé pour donner des instructions de changement de vitesse selon l'une quelconque des revendications 7 à 10, comprenant en outre :
le fait de déterminer si l'embrayage du véhicule à moteur est en prise,
dans lequel on n'émet pas d'instruction de changement de vitesse s'il est déterminé que l'embrayage n'est pas en prise.

12. Procédé pour donner des instructions de changement de vitesse selon l'une quelconque des revendications 7 à 11, comprenant en outre :
le fait de déterminer si l'accélérateur est enfoncé et si une période prédéterminée de temps s'est écoulée depuis le relâchement de l'accélérateur, et
dans lequel on maintient l'instruction de changement de vitesse émise avant le relâchement de l'accélérateur lorsque l'accélérateur n'est pas enfoncé et que la période prédéterminée de temps n'est pas écoulée depuis le relâchement de l'accélérateur.
